**Europäisches Patentamt**

**European Patent Office**

**Office européen des brevets**

(19)

(11) Publication number : **0 431 235 B1**

## (12) EUROPEAN PATENT SPECIFICATION

(45) Date of publication of patent specification :
**17.06.92 Bulletin 92/25**

(51) Int. Cl.⁵ : **F16L 27/047, F16L 27/04**

(21) Application number : **90101280.7**

(22) Date of filing : **23.01.90**

(54) **Double knuckle joint for a wide-ranged orientation of a liquid distributor with respect to the feeder pipe.**

(30) Priority : **04.12.89 IT 1260689**

(43) Date of publication of application :
**12.06.91 Bulletin 91/24**

(45) Publication of the grant of the patent :
**17.06.92 Bulletin 92/25**

(84) Designated Contracting States :
**AT BE CH DE DK ES FR GB GR LI LU NL SE**

(56) References cited :
**DD-A- 204 981**
**DE-B- 1 034 432**
**GB-A- 102 345**
**US-A- 1 914 736**
**US-A- 2 971 701**

(73) Proprietor : **SIROFLEX S.r.l.**
**Via Valverde n. 33**
**I-16014 Campomorone (GE) (IT)**

(72) Inventor : **Simoni, Giancarlo**
**Via Capraia N. 59/41**
**I-16136 Genova (IT)**

(74) Representative : **Ferrarotti, Giovanni**
**Studio Consulenza Tecnica Dr. Ing. Giovanni**
**Ferrarotti Via Alla Porta Degli Archi 1/7**
**I-16121 Genova (IT)**

EP 0 431 235 B1

## Description

This invention covers a special knuckle-joint devised for swiveling of the liquid distributor over a wide range with respect to the feed pipe or feed cock.

Several distributors are known, such as fixed or telephone showers for bath rooms, kitchens etc. sprinklers or irrigation nozzles, wash brushes etc. all fed by pipes cocks or faucets.

Since these distributors all have a rigid body as well as a rigid delivery pipe or cock, an articulated or flexible element will be necessary to permit free movement of these distributors with respect to the supply source. Flexible hoses of different nature are known to connect the feed pipe to the distributor, but they have the drawback of being very cumbersome and short-lived. Furthermore, there are several types of articulated joints which, although less cumbersome than flexible hoses, only permit a very limited movement and orientation of the distributor. These known devices only permit the distributor to move along a directrix having a 30° cone angle with respect to the feeder pipe or cock axis. In detail these known articulated joints permitting a limited movement and orientation are for instance DE-B-1.034.432, DD-A-204.981 and GB-A-102.345.

The solution according DE-B-1.034.432 foresees a sleeve provided with a double spehrehead, each head being located within a nut having an inner projection engaging the ball surface and a threaded surface for connection to a fitting. The head also engages a spherical surface on the fitting and has a recessed seal sealing therewith. This construction presents the inconvenience that this sleeve is formed in two elements, jointed by a threaded coupling. That is due to the fact that the connecting elements to the pipes to joint don't permit the passage of the heads of the sleeve and in consequence these heads have to be inserted in the connecting elements and afterwards to be connected.

DD-A-204.981 foresees an external sleeve, in the ends of which it appears spheric housings of spheric rings presenting strips to seal on the pipes. This solution permits a very limited orientation of the pipes. GB-A- 102.345 regards a joint presenting a sleeve the ends of which present housings, in which the sphericshaped ends of the pipes to connect are inserted. Analogue solution is known by US-A-1.914.736. In these solutions it is very limited the orientation of the pipes too.

It is also known by US-A-2.971.701 a joint which foresees a sleeve presenting at its ends sphereheads; these sphereheads are inserted in elements connected with the pipes to join and their stable positioning is created by the reciprocal action of a spring and of a gasket.

Obviously this solution doesn't guarantee the stability of the connection of the various elements and the perfect sealing.

In none of the above known solutions it is possible to connect among them two or more joints, so that the orientation between the feed pipe and the distributor may be increased till to reach elevate values (beyond 180° as clarified afterwards).

This invention has the aim to ensure that the connection between distributor and feed pipe is provided with a special articulated joint by which the directrix cone angle of the distributor can be adjusted up to 65°, 130° etc.

This aim can be achieved by a double knuckle-joint consisting of a sleeve fitted with two **spherical "knuckles"** fitted with a first union nut to be coupled to the feed pipe while a second union nut is connected to the distributor. This arrangement permits to swivel the distributor by about 65°.

A 130° swivel can be obtained by connecting two such double knuckle-joints and this range can be extended to about 195° when using three such joints.

The double articulation in question also permits stable positioning of the distributor with respect to the feed pipe or cock in any one position, without any support, since the resistance put up against any variation of direction will keep the distributor in a stable position which can be easily adjusted by hand. This is, however, not possible when flexible hoses are used to change the direction of the distributor, since they always require proper supporting structures or manual support.

The double articulation in question requires little space, it has a good seal and virtually unlimited life because of its sturdy components.

This invention is illustrated in two practical and exemplifying implementations in the enclosed drawings in which:

**Fig.1** shows a lateral and partial sectional view of the first ring nut in rigid material connecting the articulated joint to the feed pipe or cock, according to the initial approach;

**Fig. 2** shows a lateral and partial sectional view of the ring by which the spherehead is fitted into the first ring shown in fig.1.

**Fig.3** shows a lateral and partial sectional view of the sleeve provided with a double spherehead according to the first solution.

**Fig.4** shows a lateral and partial sectional view of the second ring nut in ductile material connecting the articulated joint to the distributor.

**Fig.5** shown a lateral and partial sectional view of the stop ring securing the other spherehead in the second socket.

**Fig.6** shows a lateral and partial sectional view of the double knuckle-joint assembly according to the first solution, complete with shower or sprinkler head.

**Fig.7** shows a lateral and partial sectional view of the suitably swiveled double knuckle-joint illustrated in fig,4 .

**Fig.8** shows a lateral and partial sectional view of the joint design in which the first ring nut connected to the feed pipe is also partly in ductile material.

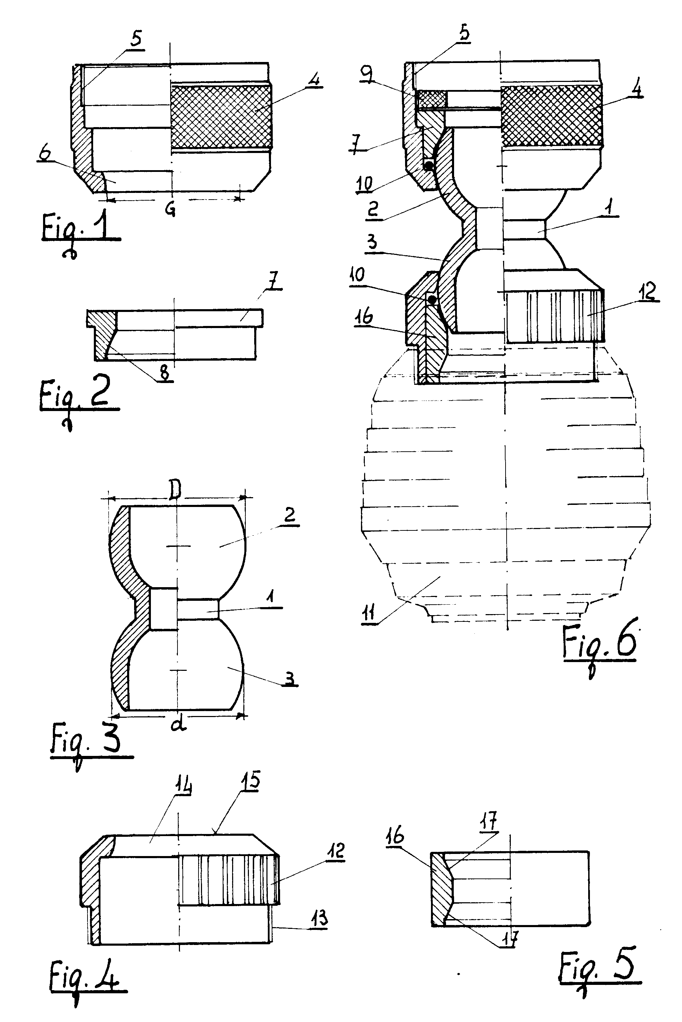

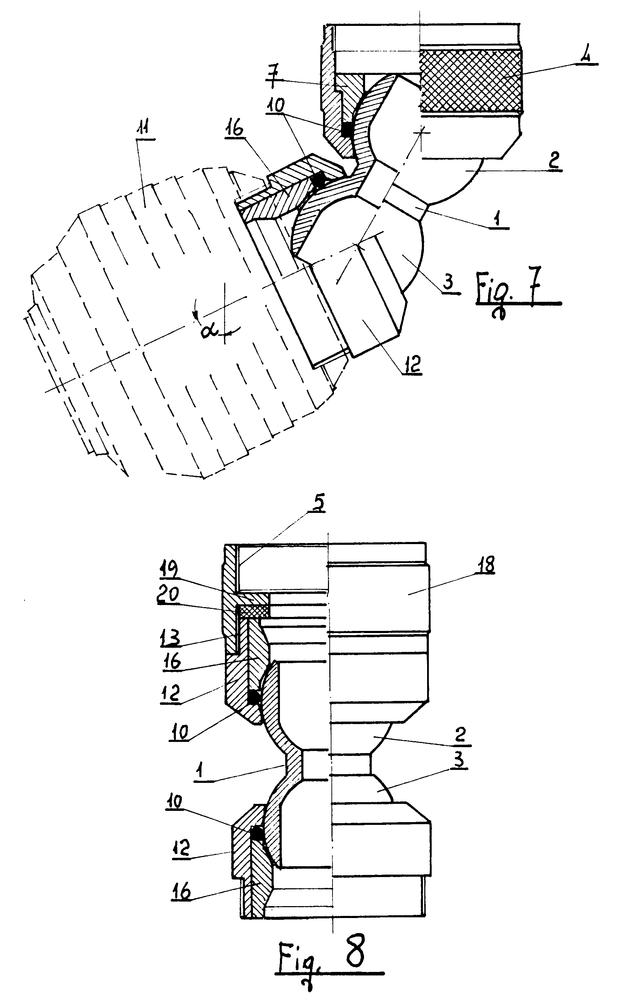

The exemplified implementation, in which the first nut ring fitted to the feed pipe or cock is in rigid material, for instance in rigid construction, is illustrated in fig. 1 and 7. The sleeve 1 has an axial bore and is fitted at its end with two "knuckles"2 and 3 having slightly differentiated diameters. In particular, the first spherehead 2 has a larger diameter D than the diameter d of the second spherehead 3. The first ring nut 4 is in rigid material, connecting the knucle-joint to the feed pipe or cock by means of its external thread 5. At the end opposite to the threading 5, this ring nut has a projecting anular shape 6 having an intermediate diameter value G with respect to the diameters of the two sphereheads 2 and 3 of the sleeve 1.

The sleeve 1 is inserted from above on the first ring nut 4. The second spherehead 3 with a smaller diameter passes through the projecting shape 6, while the first spherehead 2 with a larger diameter stops against the second head and is locked by a ring 7 having an oblique anular inner surface 8 acting, together with the anular shape 6 of the ring, as a rotation socket for the spherehead 2. The ring 7 is in turn blocked within a nut with packing 9 and by the feed pipe or cock.

An anular seal 10 is fitted between the projecting shape 6 of the ring nut 4, the ring 7 and the first swivel 2. A second ring nut 12 in ductile (plastic) material ensures connection of the double articulated joint to the user 11 while reciprocal jointing is achieved by an external thread 3. This second ring nut 12 has an internal anular projecting shape 14, generating an opening 15 having a slightly smaller diameter than the second spherehead 3. The latter can thus be pressed into the second ring nut through the shaping 14 by elastic deformation of the edge of the opening 15.

The spherehead 3, when fitted into the second ring nut 12, is blocked by the second ring 16 featuring two oblique anular surfaces 17, one of which is acting, together with anular expansion 14, as a socket for the swiveling spherehead 3. The ring 16 is kept in place by the distributor 11 and its gasket mounted on the ring nut. An anular seal 10 is inserted between the second ring nut 12, the inner ring 16 and the related spherehead 3.

The double knuckle-joint is illustrated in fig.6 together with an exemplified distributor, in this case a shower or sprinkler (dashed section). Obviously, this shower may be replaced by any other distributor (nozzle, sprinkler, wash brush etc.) or by a delivery pipe.

Conversely, fig.7 shows the assembly illustrated in fig,6 in which the distributor 11 is rotated by an angle α ranging between 0 and 65°.

It is clear that two such double articulated joints fitted between the feed pipe and the distributor will permit to rotate the distributor in a 0° - 130° range, while three such double joints will permit swiveling between 0 and 195° with respect to the feed pipe or cock. The figures show that the double articulated joint, subject matter of this invention takes very little place, much less than required for flexible couplings or known articulations, that its components are very sturdy and perfectly sealed and that the distributor can be swiveled within a rather wide range according to the scope of this invention.

A second example of the implemented double articulation is illustrated in fig.8. In this approach, the first ring nut to be connected to the feed pipe or cock is consisting of two elements 12, 16 identical to those forming the second ring nut illustrated in the first solution shown in fig. 4 and 5. The ring 18, provided with an internal thread 5 connected to the feeder is engaged in the external thread of this ring nut which is also internally provided with an anular bulge 19 locking the gasket 20 into place.

In this second approach, it can be observed that the first and second ring nut have the same components 12, 16 in ductile plastic material, whereas the ring 18 is in rigid material to connect the double articulation to the feed pipe or cock. Thus, the sphereheads 2, 3 of the sleeve 1 can have the same diameter "d" and are mounted on the ring nuts by snapping them, through elastic deformation, into the opening 15 in the internal expansion 14, as described for the second ring nut of the first solution, 1 thru 7.

This second solution, which from constructional viewpoint is simpler than the first approach, has the advantage that the double knuckle joint can be swiveled in any one direction between the distributer 11 and the ring connecting it to the distributor, whereas in the first solution, an exact orientation of the two sphereheads 2 and 3 have to be observed with respect to the two differentiated ring nuts 4, 12.

## Claims

1. Double knuckle joint for orientation within a vast range of a distributor with respect to a feed pipe or cock, presenting a sleeve (1) provided at both ends with sphereheads (2, 3) and connecting elements (4, 12) for connection with the distributor (11) and the feed pipe or cock, in which elements the sphereheads are articulated the joint presenting in combination the following features:

  – a sleeve with drilled hole (1) fitted at both ends with sphereheads (2,3), the first head (2) having a slightly larger diameter than the second head (3);

  – a first ring nut (4) in rigid material, such as metal, provided at one end with a connecting device (5), for instance an internal thread, for connection to the feed pipe or cock and at the other end with an inwardly projecting annular shaping (6), the diameter of which is intermediate between the diameters of the two sphereheads (2, 3) of the sleeve (1);

– a first ring (7) placed in the first ring nut (4) and locked into position by a gasket (9) of the feed pipe or cock, the inner surface of the ring (7) having an oblique annular surface (8) acting, together with the internal annular shaping (6) of the ring nut, as a swiveling socket for the first larger sized spherehead (2),

– an annular seal (10) between the first ring nut (4), the ring (7) and the related spherehead (2);

– a second ring nut (12) in ductile material provided with a coupling device (13) for instance an external thread, for connection to the distributor (11) and internally featuring a projecting annular shaping (14) forming a through hole (15) with a slightly smaller diameter than that of the second spherehead (3);

– a second ring (16) placed in the second ring nut (12), blocked into position by the distributor (11) and by its gasket, featuring internally two opposite oblique annular surfaces (17), one of which - together with the annular shaping (14) of the ring nut - acts as a socket for the smaller sized second spherehead (3),

– a seal (10) located between the second ring nut (12), the second ring (16) and the second spherehead (13), so that these components, after assembly, form a double knuckle joint which takes up little space while providing a good seal and permitting swiveling of the distributor within a large range with respect to the fixed feed pipe or cock.

2. Joint as described in claim 1, **characterized** by the fact that the distributor (1) can be of any type, such as for instance a shower, or shower head, nozzle, sprinkler or wash brush.

3. Joint as described in claim 1, **characterized** by the fact that this permits adjustment of the distributor with respect to the feed pipe or cock within a 0° - 65° range.

4. Joint as described in claim 3, **charactarized** by the fact that when connecting together two such double knuckle-joints, the distributor can be swiveled within a 0° - 130° range with respect to the feed pipe or cock.

5. Joint as described in claim 3, **characterized** by the fact that a swiveling range of 0° - 195° of the distributor can be achieved when connecting together three such double-knuckle joints.

6. Assembly of the joint described in claim 1, **characterized** by the fact that the sleeve (1) is axially introduced into the first ring nut (4), whereas the second smaller sized spherehead (3) is pushed through the projecting shaping (6) until the first spherehead (2) which has a larger diameter, is resting against the projecting shape, where it is locked into position by the first ring (7), whereas the smaller sized second spherehead (3) is snapped into the second ring nut (12), where it is blocked by the second ring (16).

7. Joint as described in claim 1, **characterized** by the fact that as an alternative solution, the first ring nut is consisting of an element shaped like the second ring nut (12, 16) and of a ring (18) in rigid material screwed on the external thread (13) of this ring nut, featuring an internal thread (5) for connection to the feeder and featuring also an internal bulge (19) to keep the anular seal (20) in place.

8. Joint as described in claim 7, **characterized** by the fact that the sphereheads (2,3) of the sleeve 1 have the same through hole diameter, which is smaller than the through hole diameter (15) of the ring nuts (12, 16)

9. Joint described in claim 7, **characterized** by the fact that both sphereheads (2,3) are snapped into the two ring nuts (12) due to the elastic deformation of the internal expansion hole (14), so that they are blocked by the related internal rings (16).

## Patentansprüche

1. Doppelgelenkverbindung für eine sich in einem weiten Bereich erstreckende, auf eine Zuführung oder ein Absperrorgan bezogene Orientierung, mit einer Hülse (1), die an beiden Enden mit Kugelköpfen (2, 3) und Verbindungselementen (4, 12) zur Verbindung mit dem Verteiler (11) und der Zuführung oder dem Absperrorgan versehen ist, wobei in diesen Elementen die Kugelköpfe angelenkt sind und die Verbindung folgende Kombinationsmerkmale aufweist:

– eine Hülse mit einer Bohrung (1) ist an beiden Enden mit Kugelköpfen (2, 3) versehen, wobei der erste Kopf (2) einen etwas größeren Durchmesser als der zweite Kopf (3) aufweist;

– eine erste Ringmutter (4) aus festem Material, z. B. Metall, ist an einem Ende mit einer Verbindungsvorrichtung (5), z. B. einem Innengewinde, zur Verbindung mit der Zuführleitung oder dem Absperrorgan versehen und weist am anderen Ende eine nach innen vorspringende Ringform (6) auf, deren Durchmesser zwischen den Durchmessern der beiden Kugelköpfe (2, 3) der Hülse (1) liegt;

– ein erster Ring (7) ist in der ersten Ringmutter (4) angeordnet und in seiner Stellung durch eine Dichtung ( 9 ) der Zuführleitung oder des Absperrorganes gesichert, wobei die innere Fläche des Ringes (7) eine schräge ringförmige Oberfläche (8) besitzt, die im Zusammenwirken mit der inneren Ringform (6) der Ringmutter als Schwenkfassung für den ersten größeren Kugelkopf (2) wirkt;

- eine ringförmige Dichtung (10) ist zwischen der ersten Ringmutter (4), dem Ring (7) und dem entsprechenden Kugelkopf (2) angeordnet;
– eine zweite Ringmutter (12) aus nachgiebigem Material ist mit einer Kuppelvorrichtung (13), z. B. einem Außengewinde, zur Verbindung mit dem Verteiler (11) versehen und weist eine nach innen vorspringende Form (14) auf, die eine Durchgangsbohrung (15) mit einem etwas kleinerem Durchmesser als dem des zweiten Kugelkopfes (3) bildet;
– ein zweiter Ring (16), der in der zweiten Ringmutter (12) angeordnet und durch den Verteiler (11) und seine Dichtung in Stellung gehalten wird, besitzt innen zwei einander gegenüberliegende schräge ringförmige Flächen (17), von denen eine zusammen mit der Ringform (14) der Ringmutter als Fassung für den kleineren zweiten Kugelkopf (3) dient;
– eine zweite Dichtung (10) ist zwischen der zweiten Ringmutter (12), dem zweiten Ring (16) und dem zweiten Kugelkopf (13) angeordnet, sodaß diese Teile nach deren Zusammenbau eine Doppelgelenkverbindung bilden, die geringen Raum einnimmt, gut dichtet und ein Schwenken des Verteilers in einem weiten Bereich in Bezug auf die feste Zuführung oder das Absperrorgan ermöglicht.

2. Verbindung nach Anspruch 1, **dadurch gekennzeichnet**, daß der Verteiler (1) verschiedener Art sein kann, z. B. eine Dusche, ein Duschkopf, eine Düse, ein Sprenger oder eine Waschbürste.

3. Verbindung nach Anspruch 1, **dadurch gekennzeichnet**, daß diese eine Einstellung des Verteilers in Bezug auf die Zuführleitung oder die Absperrvorrichtung in einem Bereich von 0° bis 65° erlaubt.

4. Verbindung nach Anspruch 3, **dadurch gekennzeichnet**, daß bei Verbindung zweier solcher Doppelgelekverbindungen der Verteiler in einem Bereich von 0° bis 130° in Bezug auf die Zuführleitung oder Absperorrichtung schwenkbar ist.

5. Verbindung nach Anspruch 3, **dadurch gekennzeichnet**, daß ein Schwenkbereich von 0° bis 195° des Verteilers bei Verbindung von drei solcher Doppelgelenksverbindungen erreichbar ist.

6. Aufbau der Verbindung nach Anspruch 1, **dadurch gekennzeichnet**, daß die Hülse (1) axial in die erste Ringmutter (4) eingeführt wird, während der zweite kleinere Kugelkopf (3) durch die vorspringende Form (6) gestoßen wird, bis der erste Kugelkopf (2) mit einem größeren Durchmesser gegen die vorspringende Form anliegt, wo er in seiner Lage durch den ersten Ring (7) gehalten wird, wogegen der kleinere Kugelkopf (3) in die zweite Ringmutter (12) einschnappt, wo er durch den zweiten Ring (16) blockiert wird.

7. Verbindung nach Anspruch 1, **dadurch gekennzeichnet**, daß als alternative Lösung die erste Ringmutter besteht aus einem Element, das so wie die zweite Ringmutter (12, 16) gestaltet ist, sowie einem aus festem Material bestehenden Ring, der auf das Außengewinde (13) dieser Ringmutter aufgeschraubt ist, wobei ein Innengewinde (5) zur Verbindung zur Zuführung und ein innerer Wulst (19) zum Halten der Ringdichtung (20) vorgesehen ist.

8. Verbindung nach Anspruch 7, **dadurch gekennzeichnet**, daß die Kugelköpfe (2, 3) der Hülse (1) den gleichen Durchgangsdurchmesser aufweisen, der kleiner als der Durchgangsdurchmesser der Ringmuttern (12, 16) ist.

9. Verbindung nach Anspruch 7, **dadurch gekennzeichnet**, daß beide Kugelköpfe (2, 3) zufolge der elastischen Verformung der irreren Bohrung (14) in die beiden Ringmuttern (12) eingeschnappt sind, sodaß sie durch die entsprechenden inneren Ringe (16) gehalten sind.

## Revendications

1. Double raccord articulé permettant une orientation dans une large plage d'un distributeur par rapport à un tuyau ou robinet d'arrivée, comportant un manchon (1) équipé à ses deux extrémités de têtes sphériques (2, 3) et d'éléments de liaison (4, 12), pour assurer son branchement avec le distributeur (11) et le tuyau ou robinet d'arrivée, dans lesquels éléments les têtes sphériques sont articulées, le raccord présentant en association les caractéristiques suivantes :
– un manchon avec un alésage foré (1) équipé à ses deux extrémités de têtes sphériques (2, 3), la première tâte (2) ayant un diamètre légèrement supérieur à celui de la seconde tête (3) ;
– un premier écrou annulaire (4) en matériau rigide, comme par exemple un métal, équipé à une extrémité d'un dispositif de liaison (5), par exemple d'un filet intérieur pour liaison au tuyau ou robinet d'arrivée et à l'autre extrémité d'une forme annulaire (6) faisant saillie vers l'intérieur, le diamètre de cette forme étant intermédiaire entre les diamètres des deux têtes sphériques (2, 3) du manchon (1) ;
– un premier anneau (7) monté à l'intérieur du premier écrou annulaire (4) et bloqué en place par un joint (9) du tuyau ou robinet d'arrivée, la surface intérieure de l'anneau (7) présentant une surface annulaire oblique (8) agissant, en même temps que la forme annulaire interne (6) de l'écrou annulaire, comme douille d'articulation pour la première tête sphérique de plus grosse dimension (2) ;
– un joint annulaire (10) entre le premier écrou annulaire (4), l'anneau (7) et la tête sphérique correspondante (2) ;
– un second écrou annulaire (12) en matériau ductile équipé d'un dispositif d'accouplement (13) par exemple un filet extérieur, pour liaison au distributeur (11) et présentant intérieurement une forme annulaire en saillie (14) constituant un trou traversant (15) dont le diamètre est légèrement inférieur à celui de la seconde tête sphérique (3) ;

– un second anneau (16) placé dans le second écrou annulaire (12), bloqué en place par le distributeur (11) et par son joint, présentant à l'intérieur deux surfaces annulaires obliques opposées (17) dont l'une - avec la forme annulaire (14) de l'écrou annulaire - joue le rôle de douille pour la seconde tête sphérique (3) de plus petite dimension ;

– un joint (10) placé entre le second écrou annulaire (12), le second anneau (16) et la seconde tête sphérique (13), afin que ces composants, après assemblage, forment un double raccord articulé qui n'occupe qu'un faible volume tout en constituant une bonne étanchéité et en permettant l'inclinaison du distributeur dans une large plage par rapport au tuyau ou robinet d'arrivée fixe.

2. Raccord selon la revendication 1, caractérisé par le fait que le distributeur (1) peut être d'un type quelconque, comme par exemple une douche ou une pomme de douche, un jet, une tête d'arrosage ou une brosse à laver.

3. Raccord selon la revendication 1, caractérisé par le fait qu'il permet d'ajuster le distributeur par rapport au tuyau ou robinet d'arrivée dans une plage se situant entre 0 et 65°.

4. Raccord selon la revendication 3, caractérisé par le fait que si l'on relie ensemble deux de ces doubles joints articulés, le distributeur peut être incliné dans une plage se situant entre 0 et 130° par rapport au tuyau ou robinet d'arrivée.

5. Raccord selon la revendication 3, caractérisé par le fait qu'une plage d'inclinaison se situant entre 0 et 195° du distributeur peut âtre obtenue en reliant ensemble trois doubles raccords articulés de ce type.

6. Ensemble du raccord selon la revendication 1, caractérisé par le fait que le manchon (1) est introduit dans la direction axiale à l'intérieur du premier écrou annulaire (4), tandis que la seconde tête sphérique (3) de dimension plus faible est poussée à travers la forme en saillie (6) jusqu'à ce que la première tête sphérique (2), qui a le plus petit diamètre, appuie contre la forme en saillie, et qu'elle soit bloquée à cet endroit par le premier anneau (7) tandis que la seconde tête sphérique (3) de plus faible dimension est enclenchée à l'intérieur du second écrou annulaire (12), dans lequel elle est bloquée par le second anneau (16).

7. Raccord selon la revendication 1, caractérisé par le fait que dans une solution alternative, le premier écrou annulaire comporte un élément formé de manière analogue au second écrou annulaire (12, 16) et un anneau (18) en matériau rigide vissé sur le filet extérieur (13) de cet écrou annulaire, qui comporte intérieurement un filet (5) pour liaison au tuyau d'arrivée et se cacractérise également par un renflement interne (19) qui maintient le joint annulaire (20) en place.

8. Raccord selon la revendication 7, caractérisé par le fait que les têtes sphériques (2, 3) du manchon (1) ont le même diamètre de l'orifice traversant, lequel est inférieur au diamètre de l'orifice traversant (15) des écrous annulaires (12, 16).

9. Raccord selon la revendication 7, caractérisé par le fait que les deux têtes sphériques (2,3) sont enclenchées dans deux écrous annulaires (12) grâce à la déformation élastique de l'orifice interne extensible (14), de manière à être bloqués par les anneaux intérieurs correspondants (16).

Fig. 1

Fig. 2

Fig. 3

Fig. 4

Fig. 5

Fig. 6

7

Fig. 7

Fig. 8

8